# EUROPÄISCHE PATENTSCHRIFT

(11) **EP 0 969 076 B1**
(45) Veröffentlichungstag und Bekanntmachung des Hinweises auf die Patenterteilung: **02.06.2004**
(21) Anmeldenummer: 98112250.0
(22) Anmeldetag: 02.07.1998
(51) Int. Cl.: C10L 5/48, B07C 5/342, B03B 9/06

(54) **Produktionsanlage für schad- und störstoffarme Ersatzbrennstoffe aus Abfällen**
Production plant for low-pollutant and low-impurity substitute fuel from wastes
Installation de production d'un combustible de substitution peu polluant et pauvre en impuretés à partir de déchets

(43) Veröffentlichungstag der Anmeldung: 05.01.2000
(73) Patentinhaber: RWE Umwelt AG, 41747 Viersen (DE)
(72) Erfinder: Hüskens, Jürgen, 41748 Viersen (DE)
(74) Vertreter: Sparing, Rolf Klaus

(56) Entgegenhaltungen:
- EP-A- 0 826 423
- DE-A- 4 305 006
- DE-C- 4 316 422
- DE-U- 9 321 178
- DE-U- 29 618 507

## Beschreibung

Die vorliegende Erfindung betrifft eine Produktionsanlage für schad- und störstoffarmen Ersatzbrennstoff aus Abfällen nach dem Oberbegriff des Anspruchs 1 sowie Verwendungen einer Produktionsanlage nach einem der Ansprüche 1 bis 7 zur Produktion eines chlorarmen sowie eines heizwertreichen Ersatzbrennstoffs.

Im Zuge der Abfallverwertung wird aus Abfall bzw. Abfallfraktionen, der bzw. die beispielsweise aus Sortieranlagen oder Produktionsanlagen stammen, Ersatzbrennstoff hergestellt. Der hergestellte Ersatzbrennstoff wird beispielsweise in der Zement- und Stahlindustrie eingesetzt. In der Stahlindustrie kann er darüber hinaus die Funktion eines Reduktionsmittels übernehmen.

Zur Herstellung von Ersatzbrennstoff bekannte Produktionsanlagen weisen im wesentlichen Zerkleinerungsvorrichtungen auf, mit welchen der Abfall bzw. die Abfallfraktion auf eine dem jeweiligen Eintragssystem angepaßte Korngröße zerkleinert wird. Um die Zerkleinerungsvorrichtungen vor übermäßigem Verschleiß und Beschädigungen zu schützen, ist zumeist auch ein Fe-Abscheider vorgesehen, mit welchem eisenhaltige Störstoffe aus dem Abfall abgetrennt werden.

Eine derartige Produktionsanlage ist aus der DE 196 39 330 C1 bekannt. Die bekannte Produktionsanlage umfaßt einen Vorzerkleinerer und eine Ringwalzenpresse. Zwischen Vorzerkleinerer und Ringwalzenpresse ist ein Fe-Abscheider geschaltet, mit welchem eisenhaltige Störstoffe abgetrennt werden, die Beschädigungen und vorzeitigen Verschleiß der Ringwalzenpresse verursachen könnten.

Diese bekannte Produktionsanlage zeichnet sich durch eine hohe Durchsatzleistung und einen geringen Wartungsaufwand aus. Um Ersatzbrennstoff höherer Güte hinsichtlich Schad- und Störstoffgehalt herzustellen, muß das in die Produktionsanlage eingesetzte Material entsprechend vorbereitet bzw. zusammengestellt werden.

Sofern kein von seiner Zusammensetzung her bereits geeignetes Eingangsmaterial vorliegt, muß das Eingangsmaterial durch Mischung unterschiedlicher Abfälle bzw. unterschiedlicher Abfallfraktionen auf die gewünschten Eigenschaften und Zusammensetzung des Ersatzbrennstoffs abgestimmt und vorab zusammengestellt werden. Diese Vorgehensweise erfordert ein lagerintensives Vorhalten unterschiedlicher Abfälle sowie zusätzlichen apparativen und zeitlichen Aufwand für das Mischen. Zudem sind laufende Beprobungen angelieferter Abfälle und Abfallfraktionen erforderlich.

Aufgabe der vorliegenden Erfindung ist es, eine Produktionsanlage für schad- und störstoffarmen Ersatzbrennstoff aus Abfällen nach dem Oberbegriff des Anspruchs 1 anzugeben, die eine Produktion von Ersatzbrennstoff hoher Güte hinsichtlich Schad- und Störstoffgehalt erlaubt und dabei im wesentlichen keine Mischung des Eingangsmaterials erfordert.

Diese Aufgabe wird durch eine Produktionsanlage mit den Merkmalen des Anspruchs 1 gelöst. Auf diese Weise kann auf eine Mischung der Abfälle bzw. Abfallfraktionen weitgehend verzichtet werden.

Durch das Zusammenwirken des Vorzerkleinerers, der Erfassungs- und Abtrennvorrichtung, dem Förderband zur Vereinzelung und der Ringwalzenpresse ist eine hohe Durchsatzleistung gewährleistet bei einer hohen Produktqualität, die sich durch einen minimalen Schad- und Störstoffgehalt auszeichnet. Aufwendige Mischvorgänge können entfallen und es kann ansonsten kaum verwertbares Eingangsmaterial in einer quasi Monofahrweise eingesetzt werden.

Mit einer Ausgestaltung der Produktionsanlage gemäß Anspruch 2 kann ein loser im wesentlichen scheibenförmiger Ersatzbrennstoff hergestellt werden. Der auf diese Weise hergestellte Ersatzbrennstoff läßt sich vorteilhaft für einen Einsatz in Zementwerken verwenden, da er besonders einfach pneumatisch eintragbar ist.

Mit einer Ausgestaltung der Produktionsanlage gemäß Anspruch 3 lassen sich im wesentlichen zylinderartige Pellets herstellen. Diese Pellets lassen sich vorteilhaft in Hochöfen der Stahlindustrie einsetzen und zeichnen sich durch eine gute Eintragbarkeit und eine hohe Schüttdichte aus.

Das Förderband ist vorteilhaft mit einer Förderbandgeschwindigkeit von 1 bis 3, bevorzugt 1,5 - 2,5 m/sec., betreibbar vorgesehen, um eine optimale Vereinzelung der Abfallobjekte bei gleichzeitig optimaler Durchsatzleistung der Produktionsanlage zu erreichen. Ferner hat diese Bandgeschwindigkeit den Vorteil, daß die vom Förderband an der Umlenkrolle abgeworfenen Abfallobjekte eine äußerst günstige ballistische Flugbahn aufweisen und durch in unmittelbarer Nähe der Umlenkrolle bzw. des umgelenkten Förderbandes angeordnete Abtrennmittel exakt und weitgehend streuungsfrei mit einer hohen Trennschärfe austragbar sind.

Ist die Produktionsanlage derart ausgestaltet, daß der Vorzerkleinerer Zerkleinerungsmittel zur Zerkleinerung des Abfalls auf eine Korngröße von 20 - 120, bevorzugt 50 - 100 mm, aufweist, können identifizierte schad- und störstoffhaltige Abfallobjekte zuverlässig durch die Abtrennmittel mit relativ geringem apparativen Aufwand abgetrennt werden. Ferner haben die auf diese Korngröße zerkleinerten Abfallobjekte durch ihr gegenüber größeren Abfallobjekten verringertes Eigengewicht immer noch ein gutes Haftungsvermögen auf dem Förderband, was zu einem Verharren in ihrer Position nach ihrer Identifizierung und damit zu einem sicheren Austrag führt.

Umfassen die Identifizierungsmittel im Infrarot- und / oder Röntgenbereich arbeitende Sensoren, können unterschiedliche schad- und/oder störstoffhaltige Abfallobjekte auf besonders einfache Weise erkannt werden.

Sind die Abtrennmittel als pneumatisch beaufschlagbare Düsen ausgebildet, können die identifizierten schad- und/oder störstoffhaltigen Abfallobjekte in relativ kurzer Zeit sowie ggf. hoher Stückzahl weitgehend verschleißfrei mit hoher Abtrenngeschwindigkeit abgetrennt werden. Sind die Düsen in unmittelbarer Nähe der Umlenkrolle in Förderrichtung blasend angeordnet, können die identifizierten Abfallobjekte aus kurzer Distanz mit einer sehr exakten Luftstrahlbündelung angeblasen werden, so daß Fehlschüsse vermieden werden und die Trennschärfe erhöht wird.

Zur Produktion von chlorarmem Ersatzbrennstoff werden bei der Produktionsanlage bevorzugt PVC-haltige Abfallobjekte durch die Erfassungs- und Abtrennvorrichtung identifiziert und abgetrennt. Auf diese Weise lassen sich Chlorgrenzwerte des Ersatzbrennstoffs einhalten.

Zur Produktion von heizwertreichem Ersatzbrennstoff werden bei der Produktionsanlage bevorzugt Zellstoff enthaltende Abfallobjekte, besonders bevorzugt Papier und Pappe, durch die Erfassungs- und Abtrennvorrichtung identifiziert und abgetrennt. Auf diese Weise können heizwertreiche Bestandteile in dem Ersatzbrennstoff angereichert werden, und zudem zu einer Absenkung des Aschegehalts beigetragen werden.

Ferner kann der Feuchtegehalt ohne einen aufwendigen separaten Trocknungsschritt in einfacher Weise abgesenkt und der Heizwert erhöht werden, dadurch, daß die zumeist Wasser aufweisenden Papier- und Pappebestandteile mit entsprechend niedrigem Heizwert abgetrennt werden.

Weitere Ausgestaltungen der Erfindung sind den Unteransprüchen und der nachfolgenden Beschreibung eines Ausführungsbeispieles zu entnehmen.

Die Erfindung wird nachstehend an einem Ausführungsbeispiel einer Produktionsanlage erläutert.
Fig. 1 zeigt schematisch eine Produktionsanlage für schad- und störstoffarmen Ersatzbrennstoff.
Fig. 2 zeigt ausschnittsweise einen Schnitt durch eine erste Ausführungsform einer Ringmatrize.
Fig. 3 zeigt ausschnittsweise einen Schnitt durch eine zweite Ausführungsform einer Ringmatrize.

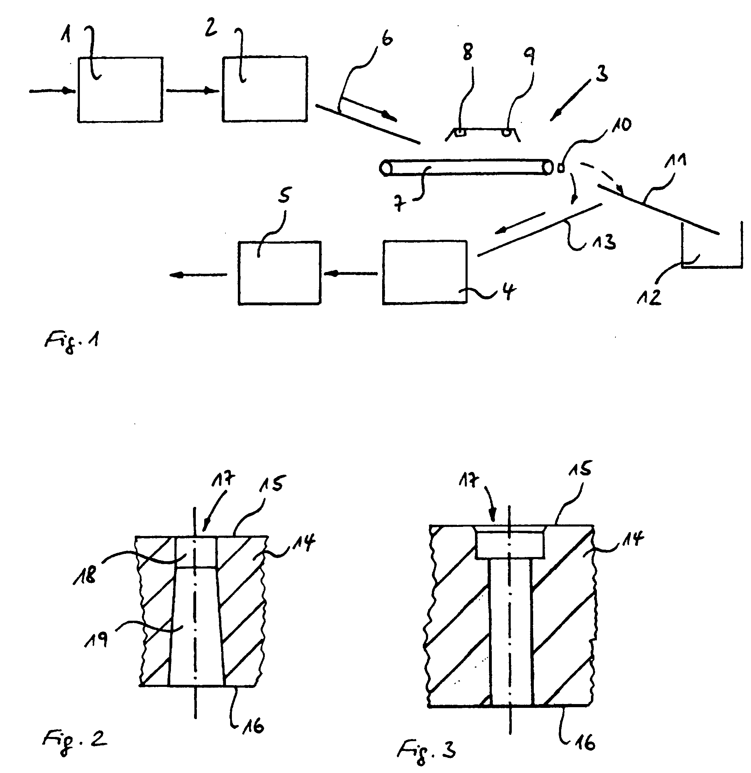

Die in Fig. 1 dargestellte Produktionsanlage umfaßt einen Grobzerkleinerer 1, einen Vorzerkleinerer 2, eine automatische Erfassungs- und Abtrennvorrichtung 3, einen Fe-Abscheider 4 und eine Ringwalzenpresse 5.

Der Grobzerkleinerer 1 ist über eine nicht näher dargestellte Fördervorrichtung mit dem Vorzerkleinerer 2 verbunden.

Von dem Vorzerkleinerer 2 führt eine erste Zuführung 6 zu einem Förderband 7, das die Erfassungs- und Abtrennvorrichtung 3 mit dem Vorzerkleinerer 2 verbindet. Die Erfassungs- und Abtrennvorrichtung 3 umfaßt Identifizierungsmittel, die als Strahlenquelle 8 und Sensor 9 ausgebildet sind sowie als Düsenleiste 10 ausgebildete Abtrennmittel. Die Identifizierungsmittel 8, 9 sind oberhalb des Förderbandes 7 mit Blick- bzw. Strahlungsrichtung auf das Förderband 7 angeordnet. Die Abtrennmittel 10 sind unmittelbar benachbart zu der in Förderrichtung stromabwärts liegenden Umlenkrolle in Fördergurtnähe derart angeordnet, daß identifizierte Abfallobjekte in Förderrichtung anblas- und aus dem Hauptstrom abtrennbar sind. Die Düsenleiste 10 wird über einen Rechner angesteuert, der Signale des Sensors 9 verarbeitet. Die Strahlenquelle 8 emittiert im wesentlichen Licht im Infrarotbereich, der Sensor 9 ist entsprechend an die von den schad- und / oder störstoffhaltigen Abfallobjekten reflektierte Strahlung angepaßt. Soweit erforderlich, kann darüber hinaus bzw. anstelle der vorgenannten eine Strahlungsquelle / Sensoreinheit als Identifizierungsmittel vorgesehen werden, die im Röntgenbereich arbeitet.

Dem Förderband 7 stromabwärts nachgeordnet ist eine zweite Zuführung 11, die zu einem Sammelbehälter 12 für schad- und / oder störstoffhaltige Abfallobjekte führt sowie eine dritte Zuführung 13, die zu dem Fe-Abscheider 4 führt.

Der Fe-Abscheider 4 ist über eine nicht dargestellte Fördervorrichtung mit der Ringwalzenpresse 5 verbunden.

Die Ringwalzenpresse 5 umfaßt im wesentlichen eine Ringmatrize 14 mit einer Innnenseite 15 und einer Außenseite 16, die von einem nicht dargestellten Motor drehantreibbar vorgesehen ist und durch die das aufgegebene Material mittels Preßorganen gepreßt wird. Die Ringmatrize 14 weist sich radial von der Innenseite 15 zur Außenseite 16 erstreckende Durchtrittsöffnungen 17 auf.

Die in Fig. 2 ausschnittsweise dargestellte Ringmatrize 14 weist eine Vielzahl von Durchtrittsöffnungen 17 auf, die an ihrem an der Innenseite 15 gelegenen Ende einen ersten zylindrischen Öffnungsabschnitt 18 aufweisen, dem ein zweiter sich zur Außenseite 16 hin konisch erweitender Öffnungsabschnitt 19 nachgeordnet ist. Der Austrittsdurchmesser des Öffnungsabschnitts 19 ist gegenüber dem Austrittsdurchmesser des Öffnungsabschnitts 18 vergrößert vorgesehen.

Die in Fig. 3 ausschnittsweise dargestellte Ringmatrize 14 weist gestuft zylindrische Durchtrittsöffnungen 17 auf, die sich radial von der Innenseite 15 zu der Außenseite 16 gestuft verengen.

Zur Herstellung eines schad- und störstoffarmen Ersatzbrennstoffs wird angelieferter Abfall zunächst in dem Grobzerkleinerer 1 auf etwa 350 mm grobzerkleinert und dann in dem Vorzerkleinerer 2 auf eine Korngröße von 20 - 120, bevorzugt 50 - 100 mm zerkleinert. Der Vorzerkleiner 2 ist hierzu bevorzugt als Einwellenschneidwerk ausgebildet und weist als Zerkleinerungsmittel - jeweils entsprechend der vorgesehenen Korngröße ausgebildet - einen Stator und einen Rotor mit geeigneten Messerblöcken auf.

Über die Zuführung 6 gelangt der zerkleinerte Abfall auf das Förderband 7, wobei er infolge der Übergabe und der vorgesehenen Bandgeschwindigkeit entzerrt und vereinzelt an der Erfassungs- und Abtrennvorrichtung 3 vorbeigeführt wird. Durch die Identifizierungsmittel 8, 9 erfolgt eine Erfassung schad- und / oder störstoffhaltiger Abfallobjekte, die durch das Förderband 7 bis zur Umlenkrolle transportiert und dann abgeworfen werden. Die sich zunächst im freien Fall befindlichen, identifizierten Abfallobjekte werden quasi unmittelbar nach Beginn ihres freien Fallens durch die rechnergesteuerten Abtrennmittel 10 in Förderrichtung auf die zweite Zuführung 11 geblasen, von der sie in den Sammelbehälter 12 gelangen. Die anderen Abfallobjekte gelangen über die dritte Zuführung 13 und den Fe-Abscheider 14 in die Ringwalzenpresse 5. In der Ringwalzenpresse 5 wird dann der zerkleinerte und weitgehend von Schad- und / oder Störstoffen befreite Abfall je nach Wahl der Ausgestaltung der Ringmatrize 14 zu lockerem, im wesentlichen scheibenförmigem Ersatzbrennstoff zerkleinernd gestanzt oder zu im wesentlichen zylinderförmigem, formstabilem Ersatzbrennstoff gepreßt.

Um einen besonders chlorarmen Ersatzbrennstoff herzustellen, werden mit der Erfassungs- und Abtrennvorrichtung 3 PVC-haltige Abfallobjekte identifiziert und abgetrennt. Mit der beschriebenen Produktionsanlage lassen sich bereits auf diese Weise und aufgrund der zuverlässigen Abtrennung von PVC vorgegebene Chlorgrenzwerte einhalten.

Soll ein besonders heizwertreicher und aschearmer Ersatzbrennstoff hergestellt werden, werden Papier und / oder Pappe-haltige Abfallobjekte identifiziert und abgetrennt, wobei durch das Zusammenwirken und die Kombination der Anlagenkomponenten sowie die Zuverlässigkeit der Produktionsanlage Heizwerte bis zu 30 MJ/kg bei einem Heizwert von 15 MJ/kg des Einsatzmaterials erreichbar sind.

## Patentansprüche

1. Produktionsanlage für schad- und störstoffarmen Ersatzbrennstoff aus Abfällen, umfassend
einen Vorzerkleinerer (2) mit Zerkleinerungsmitteln zur Zerkleinerung der Abfälle auf eine Korngröße von 20 bis 120 mm,
einen Fe-Abscheider (4), und
eine Ringwalzenpresse (5) zur Feinzerkleinerung, wobei die Ringwalzenpresse (5) mit einer Ringmatrize (14) mit sich radial von der Innenseite (15) zu der Außenseite (16) erstreckenden Durchtrittsöffnungen (17) versehen ist,
**dadurch gekennzeichnet,**
**daß** dem Vorzerkleinerer (2) eine automatische Erfassungs- und Abtrennvorrichtung (3) nachgeschaltet ist,
**daß** die Erfassungs- und Abtrennvorrichtung (3) Identifizierungsmittel (8, 9) zum Identifizieren und Abtrennmittel (10) zum Abtrennen Schadund/oder Störstoff enthaltender Abfallobjekte aufweist, und
**daß** der Vorzerkleinerer (2) durch ein Förderband (7) zur Vereinzelung von Abfallobjekten mit der Erfassungs- und Abtrennvorrichtung (3) verbunden ist.

2. Produktionsanlage nach Anspruch 1, **dadurch gekennzeichnet, daß** die Durchtrittsöffnungen (17) an ihrem an der Innenseite (15) gelegenen Ende einen Öffnungsabschnitt (18) mit einem Eintrittsdurchmesser von 6 bis 25 mm aufweisen und dem Öffnungsabschnitt (18) ein weiterer Öffnungsabschnitt (19) mit einem gegenüber dem Austrittsdurchmesser des Öffnungsabschnitts (18) größeren Austrittsdurchmesser nachgeordnet ist.

3. Produktionsanlage nach Anspruch 1, **dadurch gekennzeichnet, daß** die Durchtrittsöffnungen von der Innenseite (15) zu der Außenseite (16) durchgehend oder sich gestuft verengend zylindrisch ausgebildet sind und an dem an der Innenseite (15) gelegenen Ende einen Durchmesser von 5 bis 20 mm aufweisen.

4. Produktionsanlage nach einem der Ansprüche 1 bis 3, **dadurch gekennzeichnet, daß** das Förderband (7) mit einer Fördergeschwindigkeit von 1 bis 3 m/s, bevorzugt von 1,5 bis 2,5 m/s, betreibbar vorgesehen ist.

5. Produktionsanlage nach einem der Ansprüche 1 bis 4, **dadurch gekennzeichnet, daß** der Vorzerkleinerer (2) Zerkleinerungsmittel zur Zerkleinerung der Abfälle auf eine Korngröße von 50 bis 100 mm aufweist.

6. Produktionsanlage nach einem der Ansprüche 1 bis 5, **dadurch gekennzeichnet, daß** die Identifizienrngsmittel im Infrarot- und / oder Röntgenbereich arbeitende Sensoren (9) umfassen.

7. Produktionsanlage nach einem der Ansprüche 1 bis 6, **dadurch gekennzeichnet, daß** die Abtrennmittel als pneumatisch beaufschlagbare Düsen (10) ausgebildet sind.

8. Produktionsanlage nach einem der Ansprüche 1 bis 7, **dadurch gekennzeichnet, daß** der Erfassungs- und Abtrennvorrichtung (3) der Fe-Abscheider (4) nachgeschaltet ist.

9. Produktionsanlage nach einem der Ansprüche 1 bis 8, **dadurch gekennzeichnet, daß** die Erfassungs- und Abtrennvorrichtung (3) Mittel zum Identifizieren und Abtrennen von PVC-haltigen Abfallobjekte umfaßt, und daß der herzustellende Ersatzbrennstoffs chlorarm ist.

10. Produktionsanlage nach einem der Ansprüche 1 bis 8, **dadurch gekennzeichnet, daß** die Erfassungs- und Abtrennvorrichtung (3) Mittel zur Identifizierung und Abtrennung von papierhaltige Abfallobjekten umfaßt, und daß der herzustellende Ersatzbrennstoff heizwertreich ist.

11. Verfahren zur Herstellung eines Ersatzbrennstoffs aus Abfällen, umfassend die folgenden Schritte:
(a) Vorzerkleinerung eines Abfallgemischs zu Abfallobjekten mittels eines Vorzerkleinerers (2) auf eine Korngröße von 20 bis 120 mm;
(b) Abtrennung eisenhaltiger Abfallobjekte aus den bisher nicht abgetrennten Abfallobjekten mittels eines Fe-Abscheiders (4); und
(c) Feinzerkleinerung der bisher nicht abgetrennten Abfallobjekte mittels einer Ringwalzenpresse (5), wobei die Ringwalzenpresse (5) mit einer Ringmatrize (14) mit sich radial von der Innenseite (15) zu der Außenseite (16) erstreckenden Durchtrittsöffnungen (17) versehen ist,
**gekennzeichnet durch** die Schritte
(d1) Vereinzelung der Abfallobjekte und Zuführung der Abfallobjekte zu einer automatischen Erfassungs- und Abtrennvorrichtung (3) mittels eines Förderbandes (7);
(d2) Identifizierung von Schad- und/oder Störstoffe enthaltenden Abfallobjekten mittels Identifizierungsmitteln (8, 9) der automatischen Erfassungs- und Abtrennvorrichtung (3); und
(d3) Abtrennung der in Schritt (d2) identifizierten Abfallobjekte mittels Abtrennmitteln (10) der automatischen Erfassungs- und Abtrennvorrichtung (3)
nach Schritt (a).

12. Verfahren zur Herstellung eines chlorarmen Ersatzbrennstoffs nach Anspruch 11, **dadurch gekennzeichnet, daß** die Identifizierung in Schritt (c) eine Identifizierung PVG-haltiger Abfallobjekte ist.

13. Verfahren nach zur Herstellung eines heizwertreichen Ersatzbrennstoffs Anspruch 11, **dadurch gekennzeichnet, daß** die Identifizierung in Schritt (c) eine Identifizierung papierhaltiger Abfallobjekte ist.

## Claims

1. Production plant for low-pollutant and low-impurity fuel from waste, comprising
a pre-comminuter (2) having comminuting means for comminuting the waste to a grain size of from 20 to 120 mm,
a separator (4) for ferrous material and
a roller-and-ring press (5) for fine comminution, the roller-and-ring press (5) being provided with an ring die (14) having openings (17) to allow passage through which extend radially from the inner side (15) to the outer side (16), **characterised in that** an automatic detecting and separating arrangement (3) is connected downstream of the pre-comminuter (2), **in that** the detection and separating arrangement (3) has identifying means (8, 9) for identifying pieces of waste containing pollutants and/or impurities and separating means (10) for separating out such pieces of waste, and **in that** the pre-comminuter (2) is connected to the detecting and separating arrangement (3) by a conveyor belt (7) for organising the pieces of waste into singletons.

2. Production plant according to claim 1, **characterised in that** the openings (17) for passage through have, at their end situated on the inner side (15), a portion (18) having an inlet diameter of from 6 to 25 mm, and the opening portion (18) is followed downstream by a further portion (19) having an outlet diameter larger than the outlet diameter of the opening portion (18).

3. Production plant according to claim 1, **characterised in that**, from the inner side (15) to the outer side (16), the openings for passage through are formed to be continuously cylindrical or to be cylindrical in narrowing steps and are of a diameter of from 5 to 20 mm at the end situated on the inner side (15).

4. Production plant according to one of claims 1 to 3, **characterised in that** the conveyor belt (7) is intended to be operable at a speed of feed of from 1 to 3 m/s and preferably 1.5 to 2.5 m/s.

5. Production plant according to one of claims 1 to 4, **characterised in that** the pre-comminuter (2) has comminuting means for comminuting the waste to a grain size of from 50 to 100 mm.

6. Production plant according to one of claims 1 to 5, **characterised in that** the identifying means comprise sensors (9) operating in the infrared and/or X-ray ranges.

7. Production plant according to one of claims 1 to 6, **characterised in that** the separating means are in the form of nozzles (10) to which pneumatic pressure can be applied.

8. Production plant according to one of claims 1 to 7, **characterised in that** the detecting and separating arrangement (3) is connected downstream of the separator (4) for ferrous material.

9. Production plant according to one of claims 1 to 8, **characterised in that** the detecting and separating arrangement (3) comprises means for identifying and separating out pieces of waste containing PVC, and **in that** the substitute fuel to be produced is low in chlorine.

10. Production plant according to one of claims 1 to 8, **characterised in that** the detecting and separating arrangement (3) comprises means for identifying and separating out pieces of waste containing paper and **in that** the substitute fuel to be produced is of high calorific value.

11. Method of producing a substitute fuel from waste, comprising the following steps:
(a) pre-comminuting a mixture of waste into pieces of waste by means of a pre-comminuter (2) to a grain size of from 20 to 120 mm,
(b) separating pieces of waste containing ferrous material out from the pieces of waste which have not so far been separated out, by means of a separator (4) for ferrous material and
(c) finely comminuting the pieces of waste which have not so far been separated out by means of a roller-and-ring press (5), the roller-and-ring press (5) being provided with a ring die (14) having openings (17) to allow passage through which extend radially from the inner side (15) to the outer side (16),
**characterised by** the steps of
(d1) organising the pieces of waste into singletons and feeding the pieces of waste to an automatic detecting and separating arrangement (3) by means of a conveyor belt (7),
(d2) identifying pieces of waste containing pollutants and/or impurities by means of identifying means (8, 9) belonging to the automatic detection and separating arrangement (3) and
(d3) separating out the pieces of waste identified in step (d2) by means of separating means (10) belonging to the detecting and separating arrangement (3)
after step (a).

12. Method according to claim 11 of producing a low-chlorine substitute fuel, **characterised in that** the identification in step (c) is an identification of pieces of waste containing PVC.

13. Method according to claim 11 of producing a substitute fuel of high calorific value, **characterised in that** the identification in step (c) is an identification of pieces of waste containing paper.

## Revendications

1. Installation de production de combustible de remplacement pauvre en polluants et en impuretés à partir de déchets, laquelle installation comporte
un broyeur d'entrée (2) comportant des moyens de broyage des déchets à une grosseur de grain comprise entre 20 et 120 mm,
un extracteur de fer (4),
une presse à cylindres annulaires (5) destinée au broyage fin, la presse à cylindres annulaires (5) étant dotée d'une matrice annulaire (14) dans laquelle sont ménagées des ouvertures de passage (17) s'étendant radialement de la face intérieure (15) vers la face extérieure (16),
**caractérisée en ce que**
un dispositif de détection et de tri automatique (3) est monté en aval du broyeur d'entrée (2),
le dispositif de détection et de tri (3) comporte des moyens d'identification (8, 9) destinés à identifier les objets de rebut contenant des polluants et/ou des impuretés et des moyens de tri (10) destinés à trier ces objets de rebut, et
le broyeur d'entrée (2) est relié au dispositif de détection et de tri (3) par une bande transporteuse (7) destinée à isoler les objets de rebut.

2. Installation de production selon la revendication 1, **caractérisée en ce que** les ouvertures de passage (17) comportent à leur extrémité du côté de la face intérieure (15) une section d'ouverture (18) dont le diamètre d'entrée est compris entre 6 et 25 mm et une autre section d'ouverture (19), dont le diamètre de sortie est supérieur au diamètre de sortie de la section d'ouverture (16), est placée en aval de la section d'ouverture (18).

3. Installation de production selon la revendication 1, **caractérisée en ce que** les ouvertures de passage sont conformés en cylindres s'amincissant de façon étagée de la face intérieure (15) vers la face extérieure (16), et ont à leur extrémité du côté de la face intérieure (15) un diamètre compris entre 5 mm et 20 mm.

4. Installation de production selon l'une des revendications 1 à 3, **caractérisée en ce que** la bande transporteuse (7) est prévue pour être entraînée à une vitesse de défilement comprise entre 1 et 3 m/s, de préférence entre 1,5 et 2,5 m/s.

5. Installation de production selon l'une des revendications 1 à 4, **caractérisée en ce que** le broyeur d'entrée (2) comporte des moyens de broyage des déchets à une grosseur de grain comprise entre 50 et 100 mm.

6. Installation de production selon l'une des revendications 1 à 5, **caractérisée en ce que** les moyens d'identification comportent des capteurs (9) fonctionnant dans le domaine des infrarouges et/ou des rayons X.

7. Installation de production selon l'une des revendications 1 à 6, **caractérisée en ce que** les moyens de tri sont conformés en buses (10) à commande pneumatique.

8. Installation de production selon l'une des revendications 1 à 7, **caractérisée en ce que** le dispositif de détection et de tri (3) est monté en aval de l'extracteur de fer (4).

9. Installation de production selon l'une des revendications 1 à 8, **caractérisée en ce que** le dispositif de détection et de tri (3) comporte des moyens d'identification et de tri d'objets de rebuts contenant du PVC, et **en ce que** le combustible de remptacement à fabriquer est pauvre en chlore.

10. Installation de production selon l'une des revendications 1 à 8, **caractérisée en ce que** le dispositif de détection et de tri (3) comporte des moyens d'identification et de tri d'objets de rebut contenant du papier, et **en ce que** le combustible de remplacement à fabriquer a un pouvoir calorifique élevé.

11. Procédé de fabrication d'un combustible de remplacement à partir de déchets, lequel procédé comporte les étapes suivantes consistant à :
(a) broyer préalablement, au moyen d'un broyeur d'entrée (2), un mélange de déchets en objets de rebut à une grosseur de grain comprise entre 20 et 120 mm ;
(b) trier des objets de rebut contenant du fer parmi les objets de rebut non encore triés au moyen d'un extracteur de fer (4) ; et
(c) broyer finement des objets de rebut non encore triés au moyen d'une presse à cylindres annulaires (5), les cylindres annulaires (5) étant dotés d'une matrice annulaire (14) dans laquelle sont ménagées des ouvertures de passage (17) s'étendant radialement de la face intérieure (15) vers la face extérieure (16),
**caractérisé par** les étapes consistant à :
(d1) isoler les objets de rebut et les amener à un dispositif de détection et de tri automatique (3) au moyen d'une bande transporteuse (7) ;
(d2) identifier des objets de rebut contenant des polluants et/ou des impuretés à l'aide de moyens d'identification (8, 9) du dispositif de détection et de tri automatique (3) ; et
(d3) trier les objets de rebut identifiés à l'étape (d2) à l'aide de moyens de tri (10) du dispositif de détection et de tri automatique (3),
après l'étape (a).

12. Procédé de fabrication d'un combustible de remplacement pauvre en chlore selon la revendication 11, **caractérisé en ce que** l'identification à l'étape (c) est une identification d'objets de rebut contenant du PVC.

13. Procédé d'un combustible de remplacement à pouvoir calorifique élevé selon la revendication 11, **caractérisé en ce que** l'identification à l'étape (c) est une identification d'objets de rebut contenant du papier.
